# FASCICULE DE BREVET EUROPEEN

(11) **EP 1 798 082 B1**
(45) Date de publication et mention de la délivrance du brevet: **26.01.2011**
(21) Numéro de dépôt: 06301190.2
(22) Date de dépôt: 29.11.2006
(51) Int. Cl.: B60J 1/20

(54) **Agencement d'un rideau pare-soleil sur une porte de véhicule automobile**
Anordnung eines Sonnenschutzrollos auf einer Fahrzeugtür
Arrangement of a roller sun blind on a vehicle door

(30) Priorité: 14.12.2005 FR 0553871
(43) Date de publication de la demande: 20.06.2007
(73) Titulaire: RENAULT S.A.S., 92100 Boulogne (FR)
(72) Inventeur: Bouillon, Jean-Charles, 78940 La Queue Lez Yvelines (FR)

(56) Documents cités:
- EP-A- 0 703 106
- DE-A1- 19 940 028
- US-A1- 2005 061 454

## Description

### DOMAINE TECHNIQUE

L'invention concerne un agencement de moyens pour l'adaptation d'un rideau pare-soleil à au moins deux portes de véhicule automobile de type différent, selon le préambule de la revendication 1. Un tel agencement est connu du document US 2005/0061454 A comportant un panneau et un cadre de vitre, le rideau pare-soleil pouvant occuper une position rangée dans laquelle il est enroulé selon un axe d'enroulement dans un logement ménagé dans le panneau et une position déployée dans laquelle un bord supérieur du rideau est relié à une partie supérieure du cadre de manière que le rideau s'étend le long de la vitre.

On connaît déjà (DE 38 22 378) une portière de véhicule comportant un pare-soleil d'un type général. Toutefois, il arrive fréquemment qu'un même modèle de véhicule soit fabriqué en différentes versions qui diffèrent entre elles par certaines caractéristiques de réalisation, par exemple la forme des portières et celles des vitres qui équipent ces portières. Dans ce cas, il est nécessaire de prévoir un rideau pare-soleil différent pour chaque forme de portière. Cette situation présente de nombreux inconvénients. Elle augmente le nombre de pièces à réaliser et le nombre de références. Elle augmente également les coûts de stockage des pièces détachées et les risques d'erreurs au montage.

La présente invention a pour objet un agencement alternatif de moyens qui remédie à ces inconvénients en permettant d'utiliser le même rideau pare-soleil par au moins deux types de véhicule, par exemple une berline ou un break.

Il est nécessaire que le bord supérieur du rideau pare-soleil, c'est-à-dire approximativement la barre de tirage, soit sensiblement parallèle à son axe d'enroulement. En effet, s'il bute contre le cadre de vitre, il se déroule plus d'un côté que de l'autre ce qui risque de provoquer des tiraillements d'un côté et un fronçage de l'autre côté, ce qui est inesthétique et risque de gêner l'enroulement du rideau vers sa position rangée en provoquant des coincements.

Ces buts sont atteints conformément à l'invention, par le fait que l'agencement comporte des moyens de rattrapage aptes à donner au bord supérieur du rideau pare-soleil une orientation constante par rapport à son axe d'enroulement de manière que le rideau soit compatible avec les deux types de portes dont la partie supérieure de cadre présente une orientation différente.

Selon un premier mode de réalisation les moyens de rattrapage sont constitués par au moins une butée apte à coopérer avec le bord supérieur du rideau et à limiter son déplacement.

Cette butée, située d'un côté de la barre du tirage du pare-soleil, permet de rattraper une différence d'angle entre les parties supérieures du cadre des portes des différentes versions. En conséquence, dans un cas, par exemple dans le cas de la berline, la portière ne comporte pas de butée tandis que dans un autre cas, par exemple le break, la partie supérieure du cadre sera équipée d'une butée permettant de compenser la variation d'angle de la traverse supérieure du break par rapport à la berline.

Dans une réalisation particulière la partie supérieure du cadre, lorsqu'elle est orientée selon une direction D', porte une butée arrière coopérant alors avec l'arrière supérieur du rideau, de manière que ledit bord supérieur forme un angle α avec la direction D' .

Dans une autre réalisation particulière, la partie supérieure du cadre, lorsqu'il est orienté selon la direction D, porte une butée avant coopérant alors avec l'avant du bord supérieur du rideau de manière que ledit bord supérieur forme avec la direction D un angle égal à α/2.

Dans encore une autre réalisation, la partie supérieure du cadre, lorsqu'elle est orientée selon la direction D', porte une butée arrière coopérant alors avec l'arrière du bord supérieur du rideau, de manière que ledit bord supérieur forme avec la direction D un angle égal à α/2.

Selon un autre mode de réalisation, les moyens de rattrapage sont constitués par des crochets d'attache du bord supérieur du rideau portés par la partie supérieure du cadre de vitre, ces crochets présentant des hauteurs différentes.

Dans une réalisation particulière, la partie supérieure du cadre, lorsqu'elle est orientée selon la direction D, porte un crochet avant et un crochet arrière, la hauteur du crochet avant étant supérieure à celle du crochet arrière de manière que le bord supérieur du rideau forme avec la direction D un angle égal à α/2.

Dans une autre réalisation particulière, la partie supérieure du cadre, lorsqu'elle est orientée selon la direction D', porte un crochet avant et un crochet arrière, la hauteur du crochet avant étant inférieure à celle du crochet arrière de manière que le bord supérieur du rideau forme avec la direction D un angle égal à α/2.

D'autres caractéristiques et avantages de l'invention apparaîtront encore à la lecture de la description qui suit d'exemples de réalisation donnés à titre illustratif en référence aux figures annexées. Sur ces figures :
- la figure 1 est une vue en élevation représentant une portière de berline et une portière de break superposées afin de permettre une comparaison des formes différentes de leur cadre de vitre ;
- la figure 2 est une vue de détail d'un premier mode de réalisation de l'invention ;
- la figure 3 est une vue de détail en perspective illustrant une réalisation particulière de la butée de l'invention ;
- la figure 4 est une vue d'une variante du mode de réalisation de la figure 2 ;
- la figure 5 est une vue d'un système d'accroche de l'art antérieur ;
- la figure 6 est une vue de détail d'un crochet du système de la figure 5 ;
- la figure 7 est une vue de détail d'une languette de préhension du système de la figure 5 ;
- la figure 8 est une vue d'un second mode de réalisation de l'invention ;
- la figure 9 est une vue de détail d'un premier crochet de l'agencement de la figure 8 ;
- la figure 10 est une vue de détail d'un deuxième crochet de l'agencement de la figure 8.

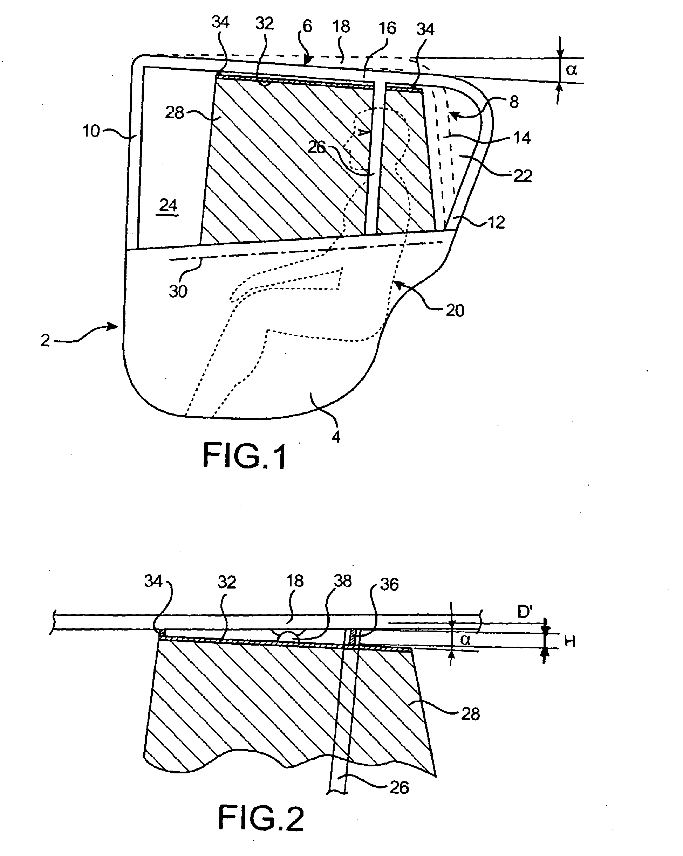

Sur la figure 1, on a représenté la superposition d'une portière de berline et d'une portière de véhicule de type break. Ces portières sont vues depuis l'extérieur du véhicule. Chacune comporte un panneau 4 constitué par une tôle pleine et un cadre de vitre. Le panneau 4 présente la même forme pour les deux types de portière. En revanche, le cadre de vitre 6 représenté en traits continus de la portière de berline et le cadre de vitre 8 du break, représenté en traits tiretés, présentent des formes différentes. Chaque cadre de vitre est constitué d'un montant avant 10, identique pour les deux types de portière, d'un montant arrière, respectivement 12 pour la berline et 14 pour le break et d'une traverse supérieure, respectivement 16 pour la berline et 18 pour le break. Comme on peut le constater, il existe un décalage angulaire, d'un angle α entre la traverse supérieure de la berline et celle du break. Cette différence s'explique par des formes de carrosserie différentes, le véhicule de type berline étant plus profilé que le break.

Un passager 20 a été représenté schématiquement assis sur la banquette arrière du véhicule. En outre, le cadre de vitre est divisé en deux parties, à savoir une vitre fixe 22 et une vitre mobile 24 séparées par un montant de vitre fixe 26. Conformément à l'invention, les portières sont équipées d'un pare-soleil 28, représenté en position déroulée sur la figure 1. Ce rideau peut être roulé, lorsqu'il n'est pas utilisé autour d'un axe 30 qui peut être un cône d'enroulement à l'intérieur d'une garniture intérieure du panneau de la portière, garniture qui comporte également d'autres équipements tels que, par exemple, les accoudoirs. A sa partie supérieure le rideau pare-soleil 28 comporte une barre de tirage 32 qui permet de le rigidifier. La barre de tirage permet également de fixer le pare-soleil à la traverse supérieure 16 ou 18 du cadre de vitre. A sa partie centrale, la barre de tirage 32 est équipée d'un crochet 38 qui permet de la fixer à la traverse supérieure 16 ou 18. Des butées sont prévues aux environs des extrémités de la barre de tirage 32. Dans le cas de la berline comme on peut le voir sur la figure 1, les butées 34 présentent une faible épaisseur. Dans le cas du véhicule du type break, la butée avant 34 est identique à celle de la berline. En revanche, comme on peut le constater sur la figure 2, la butée arrière 36 présente une plus grande hauteur H de manière à donner une orientation angulaire d'angle α à la barre de tirage par rapport à la traverse 18. Ce décalage permet de compenser la différence d'orientation angulaire des deux traverses 16 et 18 que l'on peut constater sur la figure 1. Ainsi, grâce à la présence de la butée 36, il est possible d'utiliser le même rideau pare-soleil pour les deux véhicules ce qui limite les risques d'erreur au montage. Bien entendu, le principe décrit ici dans le cas de deux véhicules différents peut être généralisé à plus de deux véhicules en prévoyant des butées de hauteur variable selon le véhicule afin que, dans chaque cas, l'orientation angulaire de la barre de tirage soit toujours conservée.

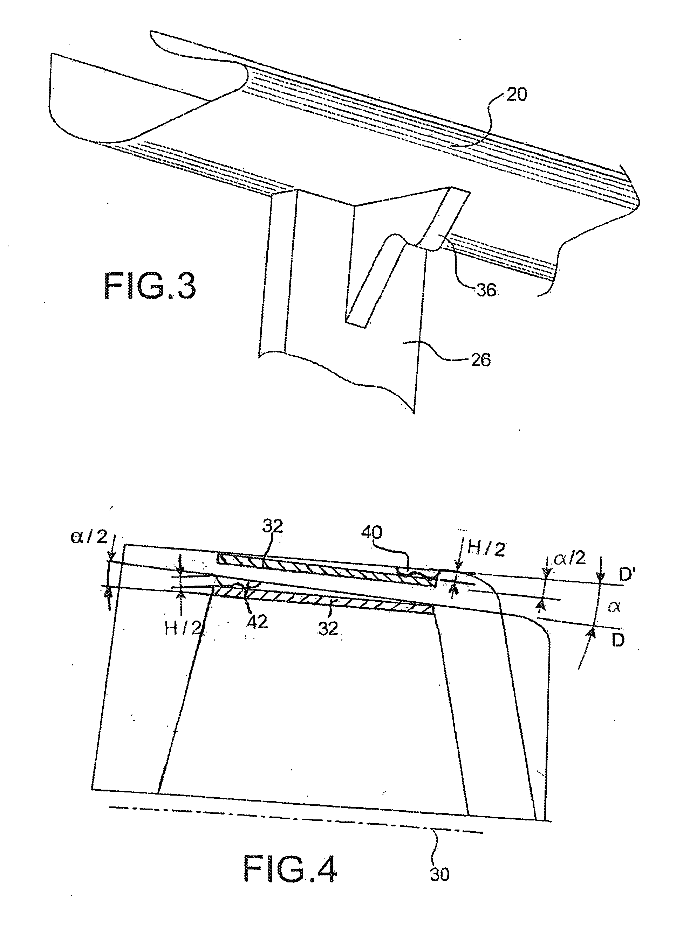

On a représenté sur la figure 3 un mode préféré de réalisation de la butée 36. Généralement, le cadre de vitre est revêtu d'un habillage 40 en matière plastique de couleur noir, qui dissimule la peinture de la carrosserie. Conformément à l'invention, la butée 36 est formée directement dans l'habillage de cadre 40, en une seule opération. De la sorte, il n'est pas nécessaire de prévoir une pièce supplémentaire pour la réalisation de la butée. De plus, il n'y a pas d'opération de montage supplémentaire à effectuer. Ainsi, la butée 36 peut être obtenue directement sans opération ni coût supplémentaires.

Dans le mode de réalisation de la figure 2, la butée 36 compense la totalité de la différence de hauteur créée par la différence d'orientation entre la partie supérieure de cadre 18 d'orientation D' et le bord supérieur du rideau pare-soleil. Cela se traduit, dans la majorité des cas, par un espacement important entre le bord supérieur du rideau pare-soleil et la partie supérieure du cadre de vitre 18 du côté arrière du pare-soleil, où est situé la butée 36. On a représenté sur la figure 4 une variante de réalisation qui permet de diviser l'angle α et la hauteur H de la butée 36 par deux. Dans cette variante on remplace la butée 36 de hauteur H par une butée 40 de hauteur H/2 sur la partie supérieure 18 du cadre de vitre de la version break. De la sorte, le bord supérieur du rideau pare-soleil, c'est-à-dire la barre de tirage 32 fait un angle α/2 avec l'orientation D' de la partie supérieure du cadre de vitre de la porte de type break. Par ailleurs on prévoit à l'avant du rideau pare-soleil sur la porte du modèle de type berline une butée 42 présentant également une hauteur égale à H/2, c'est-à-dire à la moitié de la hauteur H de la butée 36. De la sorte, le bord supérieur du rideau pare-soleil, c'est-à-dire la barre de tirage 32, de la porte du véhicule de type berline fait un angle α/2 avec la partie supérieure 16 du cadre de vitre. Il est aisé de comprendre que, dans ces conditions, le bord supérieur du rideau pare-soleil du véhicule de type break est parallèle au bord supérieur du rideau de pare-soleil du véhicule de type berline. En d'autres termes, les bords supérieurs des rideaux de pare-soleil du break et de la berline présentent une orientation constante par rapport à l'axe d'enroulement 30 du rideau pare-soleil. Il n'y a pas de problème de froissement de toile ou de tiraillement car les deux barres de tirage de la berline et du break sont dans la même cinématique d'enroulement.

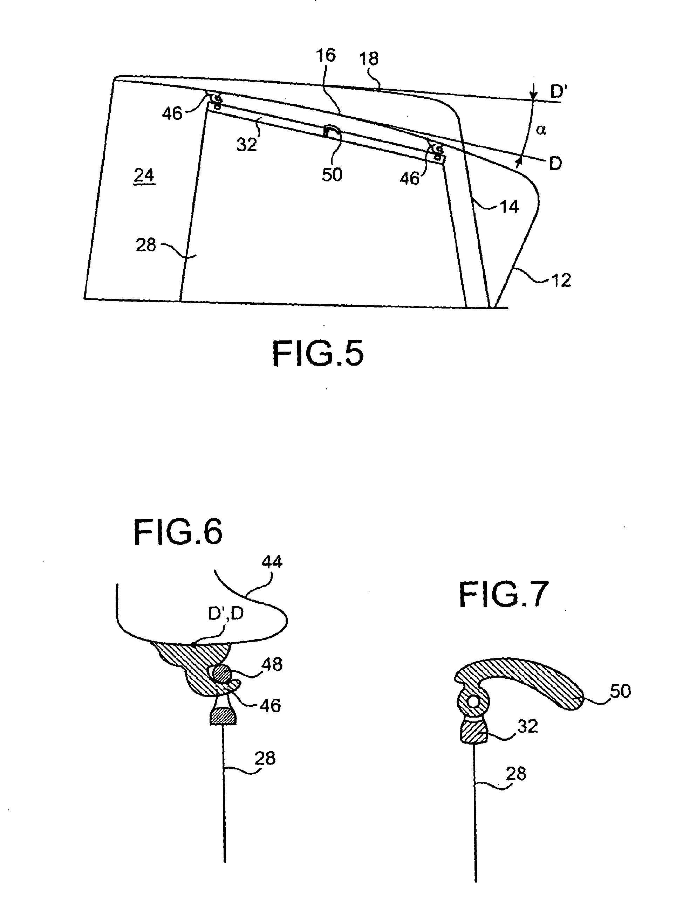

On a représenté sur les figures 5 à 7 un système de l'art antérieur dans lequel la barre de tirage 32, au lieu de comporter un crochet central et d'être en appui contre des butées, est fixée par des crochets à la partie supérieure du cadre de vitre. L'habillage du cadre de vitre 44 comporte des crochets 46 à son extrémité avant et son extrémité arrière (figure 6). De son côté, la barre de tirage 32 comporte, à son extrémité avant et à son extrémité arrière, des anses 48 qui viennent se fixer sur les crochets 46. En outre, la barre de tirage 32 comporte à sa partie centrale une languette de préhension 50 qui permet de tirer vers le haut le rideau pare-soleil 28 et d'accrocher les anses 48 aux crochets 46. Dans ce système connu les deux crochets 46 sont identiques. En d'autres termes ils présentent la même hauteur. Dans ces conditions, le bord supérieur du rideau pare-soleil, c'est-à-dire la barre de tirage 32, ne présente aucun décalage angulaire par rapport à la partie supérieure 16 du cadre de vitre de la porte du véhicule de type berline. Il en est de même en ce qui concerne le véhicule de type break. En effet le même système s'applique aux véhicules de type break bien qu'il n'ait pas été représenté sur la figure 5 afin de ne pas la surcharger. Dans ces conditions, on comprend que le bord supérieur du rideau pare-soleil du véhicule de type break ne présente aucun décalage angulaire avec la partie supérieure 18 du cadre de vitre. Dans ces conditions, et de la même manière que pour le dispositif de la figure 1, le bord supérieur du rideau pare-soleil de la berline présente un décalage angulaire α avec le bord supérieur du rideau pare-soleil du break. L'angle α correspond à l'angle des droites D et D'. Ainsi, comme on l'a déjà expliqué précédemment, il est nécessaire de prévoir un rideau pare-soleil différent pour chaque forme de portière.

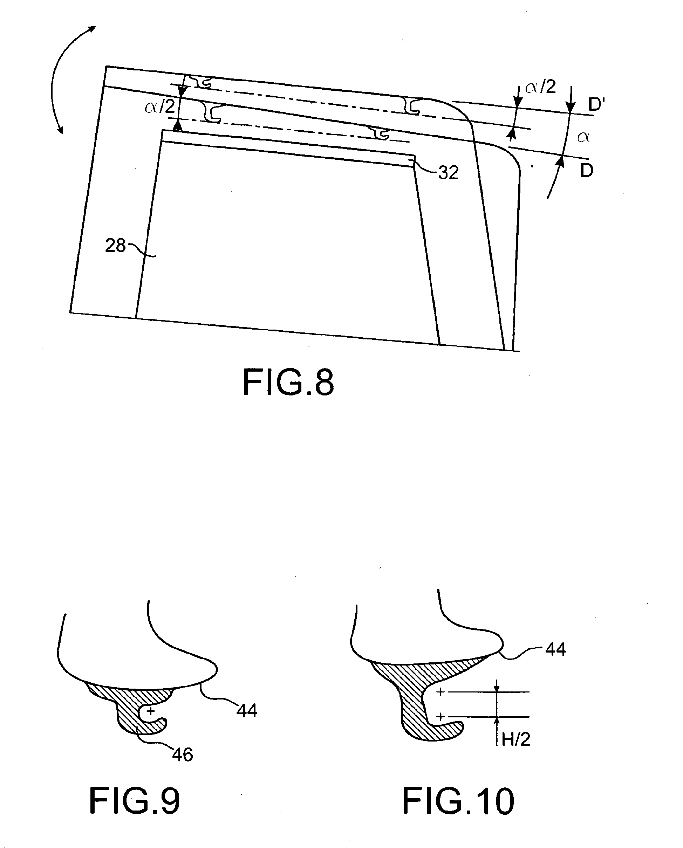

On a représenté sur les figures 8 à 10, un deuxième mode de réalisation de l'invention qui remédie à cet inconvénient. Dans cet agencement, l'un des crochets est plus long que l'autre, la différence de longueur entre les deux crochets constituant un moyen de rattrapage qui permet de donner au bord supérieur du rideau pare-soleil une orientation toujours constante par rapport à son axe d'enroulement. L'habillage du cadre de vitre 44 du véhicule de type break comporte à son extrémité avant, un crochet 52 identique au crochet classique de l'art antérieur 46 représenté sur les figures 5 et 6. En revanche, à son extrémité arrière, l'habillage du cadre de vitre de la porte de véhicule de type break comporte un crochet 54 (voir figure 10) dont la longueur est augmentée de H/2. Cette différence de longueur des crochets 52 et 54 permet d'introduire une orientation angulaire d'angle α/2 du bord supérieur de rideau pare-soleil par rapport à l'orientation D' de la partie supérieure du cadre de vitre. La situation est inversée en ce qui concerne le véhicule de type berline. A l'extrémité avant de l'habillage 44 du cadre de vitre de ce véhicule on trouve un crochet 54 présentant une plus grande longueur que le crochet 52, de type classique, situé à l'extrémité arrière de l'habillage 44 du cadre de vitre. Comme expliqué précédemment, la différence de hauteur entre les crochets 52 et 54 est égal à H/2, ce qui introduit une orientation d'angle α/2 du bord supérieur de rideau pare-soleil 28 du véhicule de type berline par rapport à la partie supérieure du cadre de vitre d'orientation D. Ainsi, quel que soit le type du véhicule, les bords supérieurs des rideaux pare-soleil sont parallèles. En d'autres termes ils présentent une orientation constante par rapport à leur axe d'enroulement. L'orientation du bord supérieur du rideau pare-soleil de véhicule de type break est égal à l'angle d'orientation du bord supérieur du rideau pare-soleil du véhicule de type berline par rapport à l'axe d'enroulement.

## Revendications

1. Agencement de moyens pour l'adaptation d'un rideau pare-soleil de véhicule automobile à au moins deux portes de type différent, lesdites portes comportant un panneau (4) et un cadre de vitre différent, ledit rideau pare-soleil (28) pouvant occuper une position rangée dans laquelle il est enroulé selon un axe d'enroulement (30) dans un logement ménagé dans le panneau (4) et une position déployée dans laquelle un bord supérieur (32) du rideau (28) est relié à une partie supérieure (16, 18) du cadre de manière que le rideau s'étende le long de la vitre (24), **caractérisé en ce que** une partie supérieure (16,18) dudit cadre de vitre différent est orientée selon une première direction (D') soit selon une deuxième direction D, les première et deuxième directions (D' et D) formant entre elles un angle α ouvert vers l'arrière du véhicule, et en ce qui les moyens d'adaptation sont des moyens de rattrapage (36, 40, 42, 52, 54) aptes a être portés par la partie supérieure (16, 18) du cadre et aptes à procurer au bord supérieur du rideau pare-soleil une orientation constante par rapport à son axe d'enroulement (30) de manière que ledit rideau pare-soleil (28) soit compatible avec les deux types de portes.

2. Agencement de moyens pour l'adaptation d'un rideau pare-soleil de véhicule automobile à au moins deux portes de type différent selon la revendication 1, **caractérisé en ce que** la partie supérieure du cadre, lorsqu'elle est orientée selon la première direction (D'), porte une butée arrière (36) coopérant alors avec l'arrière du bord supérieur (32) du rideau pare-soleil, de manière que ledit bord supérieur du rideau-pare-soleil, qui en position déployée est relié à la partie supérieure de cadre (18) par un crochet central (38), forme un angle α avec la première direction (D').

3. Agencement de moyens pour l'adaptation d'un rideau pare-soleil de véhicule automobile à au moins deux portes de type différent selon la revendication 1, **caractérisé en ce que** la partie supérieure du cadre, lorsqu'elle est orientée selon la deuxième direction (D), porte une butée avant (42) coopérant alors avec l'avant du bord supérieur (32) du rideau (28) de manière que ledit bord supérieur du rideau pare-soleil, qui en position déployée est relié à la partie supérieure par un crochet central (38), forme avec la deuxième direction (D) un angle égal à α/2 ouvert vers l'avant.

4. Agencement de moyens pour l'adaptation d'un rideau pare-soleil de véhicule automobile à au moins deux portes de type différent selon la revendication 1, **caractérisé en ce que** la partie supérieure du cadre, lorsqu'elle est orientée selon la première direction (D'), porte une butée arrière (40) coopérant avec l'arrière du bord supérieur (32) du rideau (28), de manière que ledit bord supérieur du rideau pare-soleil, qui en position déployée est relié a la partie supérieure par un crochet central (38), forme avec la première direction (D') un angle égal à α/2 ouvert vers l'arrière.

5. Agencement de moyens pour l'adaptation d'un rideau pare-soleil de véhicule automobile à au moins deux portes de type différent selon la revendication 1, **caractérisé en ce que** les moyens de rattrapage sont constitués par des crochets (52, 54) d'attache du bord supérieur du rideau, portés par la partie supérieure du cadre, ces crochets présentant des hauteurs différentes.

6. Agencement de moyens pour l'adaptation d'un rideau pare-soleil de véhicule automobile à au moins deux portes de type différent selon la revendication précédente, **caractérisé en ce que** la partie supérieure de cadre (16), lorsqu'elle est orientée selon la deuxième direction (D), porte un crochet avant (54) et un crochet arrière (52), la hauteur du crochet avant (54) étant supérieure à celle du crochet arrière (52), de manière que le bord supérieur (32) du rideau en position déployée forme avec la deuxième direction (D) un angle égal à α/2 ouvert vers l'avant.

7. Agencement de moyens pour l'adaptation d'un rideau pare-soleil de véhicule automobile à au moins deux portes de type différent selon la revendication 5, **caractérisé en ce que**, la partie supérieure de cadre (18), lorsqu'elle est orientée selon la première direction (D'), porte un crochet avant (52) et un crochet arrière (54), la hauteur du crochet avant (52) étant inférieure à celle du crochet arrière (54), de manière que le bord supérieur (32) du rideau en position deployée forme avec la première direction (D') un angle égal à α/2 ouvert vers l'arrière.

## Claims

1. Arrangement of means for fitting a motor vehicle sun blind to at least two doors of different types, said doors having different panels (4) and different window frames, it being possible for said sun blind (28) to occupy a storage position, in which it is wound around a winding axis (30) in a housing formed in the panel (4), and a deployed position, in which an upper edge (32) of the blind (28) is connected to an upper part (16, 18) of the frame such that the blind extends along the window (24), **characterized in that** an upper part (16, 18) of said different window frame is oriented either in a first direction (D') or in a second direction (D), the first and second directions (D' and D) forming an angle α between one another, said angle being open towards the rear of the vehicle, and **in that** the fitting means are adjustment means (36, 40, 42, 52, 54) able to be carried by the upper part (16, 18) of the frame and able to give the upper edge of the sun blind a constant orientation with respect to its winding axis (30) such that said sun blind (28) is compatible with the two types of door.

2. Arrangement of means for fitting a motor vehicle sun blind to at least two doors of different types according to Claim 1, **characterized in that**, when it is oriented in the first direction (D'), the upper part of the frame carries a rear stop (36) which thus engages with the rear of the upper edge (32) of the sun blind such that said upper edge of the sun blind, which, when it is in the deployed position, is connected to the upper part (18) of the frame by a central hook (38), forms an angle α with the first direction (D').

3. Arrangement of means for fitting a motor vehicle sun blind to at least two doors of different types according to Claim 1, **characterized in that**, when it is oriented in the second direction (D), the upper part of the frame carries a front stop (42) which thus engages with the front of the upper edge (32) of the blind (28) such that said upper edge of the sun blind, which, when it is in the deployed position, is connected to the upper part by a central hook (38), forms an angle equal to α/2 with the second direction (D), said angle being open towards the front.

4. Arrangement of means for fitting a motor vehicle sun blind to at least two doors of different types according to Claim 1, **characterized in that**, when it is oriented in the first direction (D'), the upper part of the frame carries a rear stop (40) which engages with the rear of the upper edge (32) of the blind (28) such that said upper edge of the sun blind, which, when it is in the deployed position, is connected to the upper part by a central hook (38), forms an angle equal to α/2 with the first direction (D'), said angle being open towards the rear.

5. Arrangement of means for fitting a motor vehicle sun blind to at least two doors of different types according to Claim 1, **characterized in that** the adjustment means consist of hooks (52, 54) for fastening the upper edge of the blind, said hooks being carried by the upper part of the frame and having different heights.

6. Arrangement of means for fitting a motor vehicle sun blind to at least two doors of different types according to the preceding claim, **characterized in that**, when it is oriented in the second direction (D), the upper part (16) of the frame carries a front hook (54) and a rear hook (52), the height of the front hook (54) being greater than that of the rear hook (52) such that the upper edge (32) of the blind, when it is in the deployed position, forms an angle equal to α/2 with the second direction (D), said angle being open towards the front.

7. Arrangement of means for fitting a motor vehicle sun blind to at least two doors of different types according to Claim 5, **characterized in that**, when it is oriented in the first direction (D'), the upper part (18) of the frame carries a front hook (52) and a rear hook (54), the height of the front hook (52) being less than that of the rear hook (54) such that the upper edge (32) of the blind, when it is in the deployed position, forms an angle equal to α/2 with the first direction (D'), said angle being open towards the rear.

## Patentansprüche

1. Anordnung von Einrichtungen zur Anpassung eines Sonnenschutzrollos eines Kraftfahrzeugs an mindestens zwei Türen unterschiedlicher Art, wobei die Türen ein unterschiedliches Türblech (4) und einen unterschiedlichen Fensterrahmen aufweisen, wobei das Sonnenschutzrollo (28) eine verstaute Stellung, in der es in einer im Türblech (4) ausgesparten Aufnahme um eine Aufrollachse (30) aufgerollt ist, und eine auseinandergebreitete Stellung einnehmen kann, in der ein oberer Rand (32) des Rollos (28) so mit einem oberen Bereich (16, 18) des Rahmens verbunden ist, dass das Rollo sich entlang des Fensters (24) erstreckt, **dadurch gekennzeichnet, dass** ein oberer Bereich (16, 18) des unterschiedlichen Fensterrahmens entweder in einer ersten Richtung (D') oder in einer zweiten Richtung (D) ausgerichtet ist, wobei die erste und die zweite Richtung (D' und D) zwischen sich einen zur Rückseite des Fahrzeugs offenen Winkel α bilden, und dass die Anpassungseinrichtungen Nachstelleinrichtungen (36, 40, 42, 52, 54) sind, die vom oberen Bereich (16, 18) des Rahmens getragen werden und dem oberen Rand des Sonnenschutzrollos eine konstante Ausrichtung bezüglich seiner Aufrollachse (30) verleihen können, damit das Sonnenschutzrollo (28) mit den zwei Arten von Türen kompatibel ist.

2. Anordnung von Einrichtungen zur Anpassung eines Sonnenschutzrollos eines Kraftfahrzeugs an mindestens zwei Türen unterschiedlicher Art nach Anspruch 1, **dadurch gekennzeichnet, dass** der obere Bereich des Rahmens, wenn er in der ersten Richtung (D') ausgerichtet ist, einen hinteren Anschlag (36) trägt, der dann mit der Rückseite des oberen Rands (32) des Sonnenschutzrollos zusammenwirkt, damit der obere Rand des Sonnenschutzrollos, der in der auseinandergebreiteten Stellung über einen zentralen Haken (38) mit dem oberen Rahmenbereich (18) verbunden ist, mit der ersten Richtung (D') einen Winkel α bildet.

3. Anordnung von Einrichtungen zur Anpassung eines Sonnenschutzrollos eines Kraftfahrzeugs an mindestens zwei Türen unterschiedlicher Art nach Anspruch 1, **dadurch gekennzeichnet, dass** der obere Bereich des Rahmens, wenn er in der zweiten Richtung (D) ausgerichtet ist, einen vorderen Anschlag (42) trägt, der dann mit der Vorderseite des oberen Rands (32) des Rollos (28) zusammenwirkt, damit der obere Rand des Sonnenschutzrollos, der in der auseinandergebreiteten Stellung über einen zentralen Haken (38) mit dem oberen Bereich verbunden ist, mit der zweiten Richtung (D) einen nach vorne offenen Winkel gleich α/2 bildet.

4. Anordnung von Einrichtungen zur Anpassung eines Sonnenschutzrollos eines Kraftfahrzeugs an mindestens zwei Türen unterschiedlicher Art nach Anspruch 1, **dadurch gekennzeichnet, dass** der obere Bereich des Rahmens, wenn er in der ersten Richtung (D') ausgerichtet ist, einen hinteren Anschlag (40) trägt, der mit der Rückseite des oberen Rands (32) des Rollos (28) zusammenwirkt, damit der obere Rand des Sonnenschutzrollos, der in der auseinandergebreiteten Stellung über einen zentralen Haken (38) mit dem oberen Bereich verbunden ist, mit der ersten Richtung (D') einen nach hinten offenen Winkel gleich α/2 bildet.

5. Anordnung von Einrichtungen zur Anpassung eines Sonnenschutzrollos eines Kraftfahrzeugs an mindestens zwei Türen unterschiedlicher Art nach Anspruch 1, **dadurch gekennzeichnet, dass** die Nachstelleinrichtungen aus Haken (52, 54) zur Befestigung des oberen Rands des Rollos bestehen, die vom oberen Bereich des Rahmens getragen werden, wobei diese Haken verschiedene Höhen aufweisen.

6. Anordnung von Einrichtungen zur Anpassung eines Sonnenschutzrollos eines Kraftfahrzeugs an mindestens zwei Türen unterschiedlicher Art nach dem vorhergehenden Anspruch, **dadurch gekennzeichnet, dass** der obere Rahmenbereich (16), wenn er in der zweiten Richtung (D) ausgerichtet ist, einen vorderen Haken (54) und einen hinteren Haken (52) trägt, wobei die Höhe des vorderen Hakens (54) größer als diejenige des hinteren Hakens (52) ist, damit der obere Rand (32) des Rollos in der auseinandergebreiteten Stellung mit der zweiten Richtung (D) einen nach vorne offenen Winkel gleich α/2 bildet.

7. Anordnung von Einrichtungen zur Anpassung eines Sonnenschutzrollos eines Kraftfahrzeugs an mindestens zwei Türen unterschiedlicher Art nach Anspruch 5, **dadurch gekennzeichnet, dass** der obere Rahmenbereich (18), wenn er in der ersten Richtung (D') ausgerichtet ist, einen vorderen Haken (52) und einen hinteren Haken (54) trägt, wobei die Höhe des vorderen Hakens (52) geringer als diejenige des hinteren Hakens (54) ist, damit der obere Rand (32) des Rollos in der auseinandergebreiteten Stellung mit der ersten Richtung (D') einen nach hinten offenen Winkel gleich α/2 bildet.
